# EUROPÄISCHE PATENTSCHRIFT

(11) **EP 2 150 386 B1**
(45) Veröffentlichungstag und Bekanntmachung des Hinweises auf die Patenterteilung: **22.04.2015**
(21) Anmeldenummer: 08750029.4
(22) Anmeldetag: 05.05.2008
(51) Int. Cl.: B29C 45/00, B29C 45/56, B29C 45/14

(54) **HERSTELLUNG VON FOLIEN FÜR VERBUNDVERGLASUNGEN DURCH SPRITZGIESS- ODER SPRITZPRÄGEVERFAHREN**
PRODUCTION OF FILMS FOR COMPOSITE GLAZINGS BY MEANS OF INJECTION MOULDING OR INJECTION COMPRESSION MOULDING
PRODUCTION DE FILMS POUR VITRAGES COMPOSITES PAR MOULAGE PAR INJECTION OU PAR INJECTION COMPRESSION

(30) Priorität: 03.05.2007 DE 102007021103
(43) Veröffentlichungstag der Anmeldung: 10.02.2010
(73) Patentinhaber: Kuraray Europe GmbH, 65795 Hattersheim (DE)
(72) Erfinder: STENZEL, Holger, 53773 Hennef (DE); KARPINSKI, Andreas, 51519 Odenthal (DE)
(86) Internationale Anmeldenummer: PCT/EP2008/055467
(87) Internationale Veröffentlichungsnummer: WO 2008/135544

(56) Entgegenhaltungen:
- EP-A- 0 420 228
- WO-A-01/66082
- WO-A-99/57196
- FR-A- 2 750 075
- JP-A- 2003 329 843
- US-A- 3 885 899
- US-A- 4 173 672
- US-A- 4 671 913
- US-A- 4 874 654
- US-A- 4 976 805
- US-A- 5 980 666
- US-B1- 6 368 537
- US-B1- 6 669 890

## Beschreibung

Die Erfindung betrifft die Herstellung von weichmacherhaltigen Folien auf Basis von Polyvinylacetalen durch Spritzgieß- oder Spritzprägeverfahren.

### Technisches Gebiet

Folien für Verbundsicherheitsverglasungen werden üblicherweise durch Extrusionsverfahren hergestellt. Bei der Extrusion werden Kunststoffe oder andere zähflüssige Materialien in einem kontinuierlichen Verfahren durch eine Düse gepresst. Dazu wird der Kunststoff - das Extrudat - zunächst durch einen Extruder (auch Schneckenpresse genannt) mittels Heizung und innerer Reibung aufgeschmolzen und homogenisiert. Weiterhin wird im Extruder der für das Durchfließen der Düse notwendige Druck aufgebaut. Nach dem Austreten aus der Düse wird der schmelzflüssige Kunststoff über Walzen oder im Wasserbad abgekühlt und erstarrt zu seiner endgültigen Form. Durch gleichzeitiges, kontinuierliches Abziehen wird dabei die Folienform erreicht.

### Stand der Technik

Als Basis für solche Folien werden fast ausschließlich Polyvinylacetale, insbesondere Polyvinylbutyral (PVB) in Verbindung mit einem oder mehreren Weichmachern eingesetzt. Die Herstellung erfolgt insbesondere durch Extrusionsverfahren unter Schmelzbruchbedingungen zur gezielten Einstellung der Oberflächenrauhigkeit (z.B. EP 0 185 863 B1). Diese Verfahren werden auch zur Herstellung von Folien mit einem Farbband eingesetzt; so beschreibt z.B. EP 0 177 25 388 die Coextrusion von zwei Schmelzeströmen, die unterschiedliche Additive und/oder Pigmente aufweisen können, zu einer teilgefärbten Folie.

Die so erhaltenen Folien besitzen eine unregelmäßige Oberflächenrauhigkeit, die optional anschließend durch mechanische Prägung in eine regelmäßige Struktur umgeformt werden kann (EP 0 611 21 63, EP 0 611 21 59).

Zur Herstellung von PVB-Folien für Verbundverglasungen werden Extrusionsverfahren in großem Maßstab eingesetzt und liefern Folien mit einer Breite von bis zu 3,20 m und einer Länge von bis zu 1000 m. Aus den Folienbahnen werden bei der Herstellung von Verbundverglasungen entsprechend große Folienstücke (Sheets) abgeschnitten. Dies hat zur Folge, dass insbesondere bei der Herstellung von (nicht rechteckigen) Windschutzscheiben im Automobilbau große Mengen an Abschnitten (sog. Trimmings) anfallen.

Das Ablängen der Folie bzw. der Zuschnitt auf die erforderliche Form der Glasscheiben ist ein aufwändiger Verfahrensschritt. Zudem müssen die Verschnitte (Trimmings) entweder entsorgt oder beim Folienhersteller recycelt werden, was in beiden Fällen kostenintensiv ist.

Das Dokument WO-A-0166082 offenbart ein Verfahren zur Herstellung einer Folie gemäß dem Oberbegriff des Anspruchs 1.

### Aufgabe

Aufgabe der vorliegenden Erfindung war es daher, ein Verfahren zur Herstellung von Folien für Verbundverglasungen bereit zu stellen, mit dem Folien mit vorbestimmter Form und Größe ohne die gängige Extrusionstechnik hergestellt werden können.

Zur Herstellung von Formteilen aus thermoplastischen Kunststoffen sind aus anderen technischen Gebieten Spritzguss- oder Spritzprägeverfahren bekannt.

Das Spritzgießen (auch als Spritzguss oder Spritzgussverfahren bezeichnet) ist ein Urformverfahren, welches hauptsächlich in der Kunststoffverarbeitung eingesetzt wird. Mit diesem Verfahren lassen sich wirtschaftlich direkt verwendbare Formteile in großer Stückzahl herstellen. Dazu wird mit einer Spritzgießmaschine der jeweilige Werkstoff, beziehungsweise die Formmasse, in einer Spritzeinheit plastifiziert und in ein Spritzgießwerkzeug eingespritzt. Der Hohlraum, d.h. die Kavität des Werkzeugs bestimmt die Form und die Oberflächenstruktur des fertigen Teils. Es sind heute Teile von wenigen Zehntel Gramm bis in den zweistelligen Kilogramm-Bereich herstellbar.

Durch Spritzgießen lassen sich Gegenstände mit hoher Genauigkeit, wie zum Beispiel für die Feinwerktechnik, und/oder Massenprodukte in kurzer Zeit herstellen. Dabei kann die Oberfläche des Bauteiles nahezu frei gewählt werden. Glatte Oberflächen für optische Anwendungen, lassen sich ebenso wie Narbungen für berührungsfreundliche Bereiche, Muster oder Gravuren herstellen. Das Spritzgussverfahren ist jedoch nur für größere Stückzahlen wirtschaftlich sinnvoll, da die Kosten für das Werkzeug einen großen Teil der notwendigen Investitionen ausmachen. Selbst bei einfachen Werkzeugen ist die Schwelle der Wirtschaftlichkeit erst bei einigen tausend Teilen erreicht. Dafür können die Werkzeuge, abhängig von der verwendeten Formmasse, für die Herstellung von bis zu einigen Millionen Teilen verwendet werden.

Diese Verfahren werden aber zur Herstellung von Folien in der Regel nicht eingesetzt, da das Oberflächen-zu-VolumenVerhältnis bei Folien extrem ungünstig ist.

EP 0 640 460 und AT 56179 beschreiben Verfahren zum Spritzgießen von Folien ohne Benennung der verwendeten Materialien. Da weichmacherhaltiges PVB selbst bei Verarbeitungstemperaturen von 200 °C sehr hohe Schmelzviskositäten und auch gekühlt nur eine geringe Formstabilität aufweist, sind Spritzgussverfahren für weichmacherhaltiges PVB noch nicht untersucht worden.

Überraschenderweise wurde gefunden, dass sich Folien oder Folien-Sheets auf Basis von weichmacherhaltigen Polyvinylacetalen wie Polyvinylbutyral (PVB) in nahezu beliebigen Formen, Größen und Farbanordnungen durch Spritzguss- oder Spritzprägeverfahren herstellen lassen.

### Darstellung der Erfindung

Gegenstand der vorliegenden Erfindung ist daher ein Verfahren gemäß Anspruch 1.

Bei diesem Verfahren wird eine Masse auf Basis von weichmacherhaltigem Polyvinylacetal durch Spritzgießen oder Spritzprägen zu einer Folie ausgeformt. Im Folgenden wird das Verfahren bzw. die für die Herstellung einer Folie verwendbaren Maschinen und Techniken näher erläutert.

Eine übliche Schneckenkolbenspritzgießmaschine zieht die Masse auf Basis weichmacherhaltiger Polyvinylacetale in Form eines Granulats aus einem Trichter in die Schneckengänge ein, zerteilt und schert sie. Die dadurch entstehende Friktionswärme sorgt in Verbindung mit der vom beheizten Zylinder zugeführten Wärme für eine relativ homogene Schmelze. Diese sammelt sich vor der Spitze der zurückdrehenden Schnecke.

In der sog. Einspritzphase wird die Schnecke rückseitig hydraulisch oder durch mechanische Kraft unter Druck gesetzt. Dabei wird die Schmelze unter hohem Druck (meist zwischen 500 und 2000 bar) durch die Rückstromsperre, die an das Werkzeug angedrückte Düse, ggf. ein Heißkanalsystem (bei modernen Serienwerkzeugen üblich) und den Angusskanal in den formgebenden Hohlraum des temperierten Spritzgießwerkzeugs gedrückt. Ein reduzierter Druck wirkt als Nachdruck noch so lange auf die Schmelze, bis die Anbindung (Anguss) erstarrt (eingefroren) ist. Dadurch wird die beim Abkühlen entstehende Volumenschwindung weitgehend ausgeglichen. Durch diese Maßnahme wird die Maßhaltigkeit und die gewünschte Oberflächenqualität erreicht. Danach beginnt die Rotation der Schnecke. Während auf diese Weise das Schussgewicht für die folgende Folie aufbereitet wird, kann die Folie im Werkzeug noch abkühlen, bis die Seele (flüssiger Kern) erstarrt ist. Das Werkzeug öffnet und wirft die fertige Folie aus.

Dabei kann der Anguss abgetrennt werden. Auch angussloses Spritzgießen ist mit entsprechender Angussgestaltung möglich. Die Folien fallen aus dem Werkzeug oder werden durch Handlinggeräte aus dem Werkzeug entnommen und geordnet abgelegt oder gleich einer Weiterverarbeitung zugeführt.

Das Spritzprägen ist ein abgewandeltes Spritzgießen. Dabei wird die Kunststoffschmelze als sog. Massekuchen in das praktisch drucklose, nicht völlig geschlossene Werkzeug eingespritzt. Unter der Wirkung des sich nach dem Einspritzen aufbauenden Schließdrucks wird das Formteil endgültig ausgeformt. Bei einer Variante kann die Kavität komplett gefüllt werden. Der ansteigende Innendruck öffnet das Werkzeug um einen kontrollierten geringen Weg. Durch Anheben der Schließkraft wird Druck auf die Formmasse ausgeübt und ein relativ spannungsarmes Formteil ausgeformt. Diese Variante wird beispielsweise bei der Herstellung von Formteilen aus Polycarbonat (PC), wie CDs oder DVDs oder Kunststoffscheiben verwendet. Das Spritzprägen wird bei Thermoplasten und bei Duroplasten angewendet. Spritzprägen kann man auf Maschinen aller Bauarten. Besonders einfach lässt sich der Arbeitsablauf auf der Schließseite auf Maschinen mit vollhydraulischem Schließsystem steuern. Die beim Spritzgießverfahren bei faserverstärkten Formmassen auftretende Faserorientierung wird beim Spritzprägen teilweise aufgehoben. Spritzprägen liefert bei allen Kunststoffen Formteile mit sehr guter Oberfläche und geringer mechanischer Anisotropie.

Das Spritzprägeverfahren kann dann sinnvoll angewendet werden, wenn, wie in der vorliegenden Erfindung, lange flache Teile mit einem ungünstigen Wandstärken-Fließweg-Verhältnis und zum Verzug neigende Teile hergestellt werden sollen. Es lassen sich Teile mit höchster Präzision herstellen. Man erhält hochfeste Teile mit hoher Oberflächengüte und sehr guter Maßgenauigkeit, da beim Prägevorgang die Formteile in der Werkzeughöhlung in einem Maße verdichtet werden, wie dies über die Angusswege auch bei höchstem Einspritzdruck nicht möglich ist. Sie besitzen demzufolge eine homogenere Struktur als normal gespritzte Artikel, so dass mit diesem Verfahren z.B. optische Linsen und Prismen erzeugt werden können.

Das Spritzprägeverfahren ist für die Herstellung von Polyvinylacetal/PVB-Foliensheets besonders geeignet, da das Wandstärken-Flächen- und damit auch das Wandstärken-Fließwegverhältnis ungünstig ist und im konventionellen Spritzgießverfahren zu sehr hohen Einspritzdrücken führen könnte. Verstärkt wird dieser Effekt durch die relativ hohen Schmelzviskositäten, die weichgemachtes PVB bei Verarbeitungstemperaturen um 200°C hat. Der Vorteil der Spannungsarmut beim Spritzprägen kommt bei PVB nicht zum Tragen, da PVB ein amorpher Werkstoff ist.

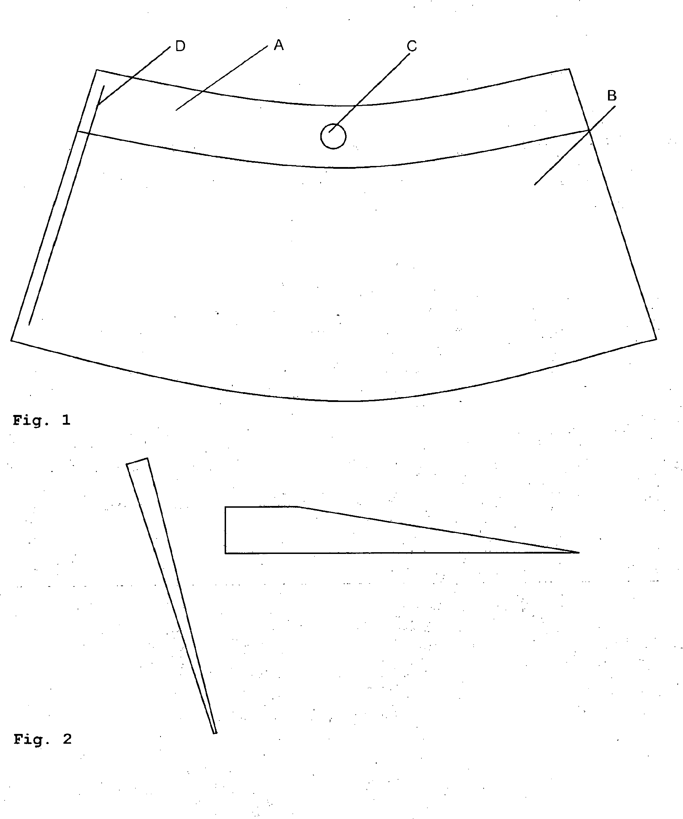

Die Folien oder Foliensheets können jede beliebige Form besitzen, insbesondere die einer Windschutzscheibe im Automobil oder Flugzeugbereich. Fig. 1 zeigt eine übliche Form einer Windschutzscheibe in schematisierter Ansicht. Die Dicke der Folien beträgt, sofern die Folie planparallel ist, üblicherweise vielfache von 0,38 mm wie 0,76 mm oder 1,14 mm usw.

Die Folien werden durch Spritzgieß-bzw. Spritzprägeverfahren hergestellt. Hiermit lassen sich insbesondere Folien produzieren, die im (kostengünstigeren) Extrusionsverfahren nicht oder nur mit sehr hohem Aufwand herstellbar sind. Dies können zum Beispiel Folien sein, deren Dicke über der Breite variabel ist, d.h. einen keilförmigen Querschnitt besitzen (Fig. 2 zeigt den Querschnitt solcher Folien).

Erfindungsgemäß hergestellte Folien besitzen einen keilförmigen Querschnitt, der einen Winkel von 0,1 bis 1 mrad, bevorzugt 0,3 bits 0,7 mrad und insbesondere 0,4 bis 0,6 mrad entspricht.

Keilförmige Folien finden für die Projektion in "Head-Up Displays" Verwendung und sind z.B. in EP 0 893 726 B1 beschrieben. Bei einer Projektion auf Verbundverglasungen, die aus zwei durch eine PVB-Folie verbundene Gläser bestehen, kommt normalerweise zu störenden Doppelbildern. Verhindert wird dieser negative Effekt dadurch, dass die Folien wenige Bogenminuten keilförmig ausgeführt sind und dann beide Bilder übereinander liegen.

Mittels der Spritzgieß- bzw. Spritzprägetechnik kann nahezu jeder beliebige Verlauf der Foliendicke erzeugt werden. Das hergestellte Sheet kann in seinen Außenabmessungen der Geometrie der Windschutzscheibe exakt oder ggf. mit einem vordefinierten Überstand angepasst werden.

Dies ist insbesondere dann von Bedeutung, wenn es sich um Folie mit einem Farbband handelt, d.h. mit gefärbten und ungefärbten Teilbereichen. Solche - keilförmigen oder planparallen - Folien werden z.B. im Automobilbau verwendet und weisen im oberen Teil der Folie einen ca. 5 - 90 cm, bevorzugt 10 - 25 cm breiten gefärbten Teilbereich, ein sog. Farbband auf, mit einem andersfarbigen oder ungefärbten Rest der Folie. Fig. 1 zeigt eine solche Folie, wobei (A) einen gefärbten und (B) einen ungefärbten Teilbereich bezeichnet.

In der Regel werden Folien dieser Art beim Hersteller der Windschutzscheiben einseitig gereckt, um das Farbband parallel zur Oberkante der in der Regel nicht rechteckigen Windschutzscheibe laufen zu lassen. Durch den Reckvorgang wird das Dickenprofil der Folie ebenfalls verändert, was bei Folien mit keilförmigem Querschnitt einen negativen Einfluss auf das Keilprofil haben kann.

Dieser Reckvorgang entfällt bei erfindungsgemäß spritzgegossenen oder spritzgeprägten Folien. Das erfindungsgemäße Spritzgieß- bzw. Spritzprägeverfahren ist daher besonders für Folien mit keilförmigem Querschnitt mit Farbband z.B. für Head-Up-Display-Anwendungen geeignet. Im Extrusionsverfahren sind solche Folien nur mit großem Aufwand herstellbar und müssen anschließend einem weiteren Verfahrensschritt, dem einseitigen Recken, unterzogen werden.

Es gibt aber auch Zusatzanforderungen an PVB-Folien, die eine Herstellung durch die konventionellen, kontinuierlichen Extrusionsverfahren praktisch ausschließen. So werden in modernen Fahrzeugen immer häufiger Sensoren im oberen Bereich hinter der Windschutzscheibe angebracht, die automatisch bei Dämmerung die Scheinwerfer oder bei einsetzendem Regen die Scheibenwischer einschalten, d.h. so genannte Licht- bzw. Regensensoren. Verdeckt das Farbband diese Sensoren, so kann deren Funktion eingeschränkt oder unmöglich werden, wenn die Sensoren in einem Wellenlängenbereich arbeiten, der durch das Farbband herausgefiltert wird. Dies kann sowohl im sichtbaren Bereich des Lichtes, also im Wellenlängenbereich von 400-780 nm der Fall sein, als auch im nahen IR-Bereich oberhalb von 800 nm. Im Bereich der Sensoren muss dann ein ungefärbter bzw. transparenter Bereich im gefärbten Bereich der Folie (d.h. im Farbband) eingearbeitet sein (so genannte sektorielle Transparenz). Die Herstellung einer solchen Folie ist im kontinuierlichen Extrusionsverfahren nicht möglich, da hier nur kontinuierliche bzw. durchgehende Bereiche einer Folie farblich oder in Bezug auf die Rezeptur abweichend von anderen Bereichen hergestellt werden können.

Dies ist aber durch das erfindungsgemäße Spritzgieß- bzw. Spritzprägeverfahren möglich. Hiermit können Folien hergestellt werden, die in gefärbten Teilbereichen ungefärbte, anders gefärbte oder schwächer gefärbte Bereiche oder in ungefärbten Teilbereichen gefärbte Bereiche aufweisen. Die Form und Größe dieser Bereiche ist von der jeweiligen Anwendung abhängig und kann z.B. inselförmig eine Fläche von wenigen cm² einnehmen.

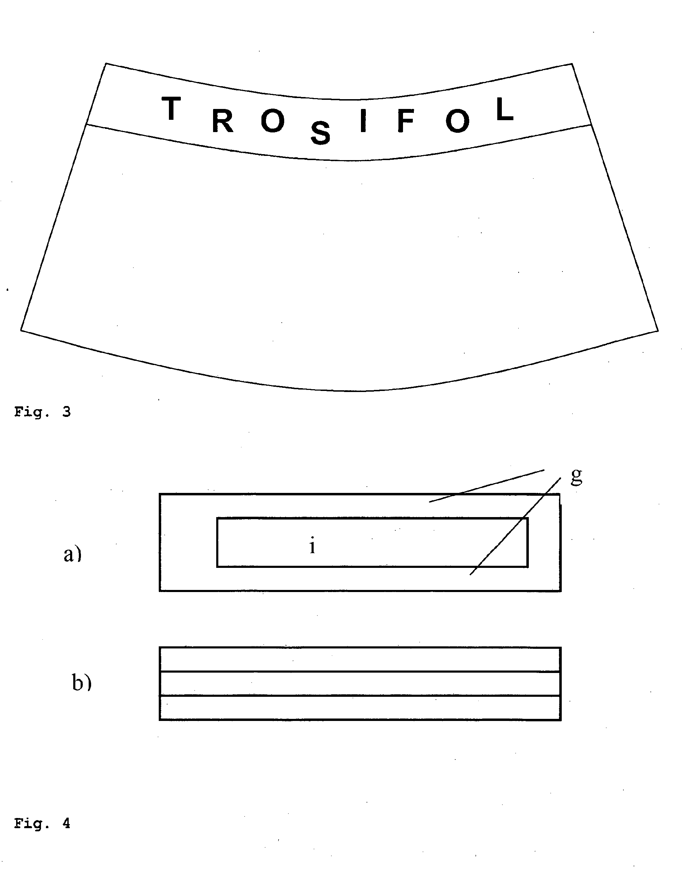

Fig. 1 zeigt eine Folie mit einem gefärbten Teilkeilbereich (A) und einem ungefärbten Teilbereich (B). Der Bereich (C) ist nicht oder nur geringfügig gefärbt und dient zur Abdeckung eines Sensors, der durch den gefärbten Teilbereich (A) nicht arbeiten könnte. (D) bezeichnet eine in die Folie eingelassene Antenne. Die in gefärbten oder ungefärbten Teilbereichen angeordneten, schwächer gefärbten, anders gefärbten oder ungefärbten Bereiche können jede denkbare geometrische Form besitzen, die auch lediglich dekorativen Charakter haben kann. So zeigt Fig. 3 eine Folie mit einem ungefärbten oder anders gefärbten in einem (gefärbten) Farbband, wie zum Beispiel ein schwarzer Schriftzug in rotem Farbband.

Um Folien mit Farbband herzustellen, kann man sich dem Zweikomponenten-Spritzgießverfahren, kurz 2K-Verfahren genannt, bedienen.

Beim 2K-Verfahren gibt es verschiedene Arten des Spritzgießens, denen allen gemeinsam ist, dass Spritzgießmaschinen mit zwei Spritzeinheiten aber nur einer Schließeinheit benötigt werden. Die Spritzeinheiten müssen harmonierend arbeiten, aber immer unabhängig voneinander steuerbar sein. Die Komponenten können durch eine Spezialdüse eingespritzt oder an verschiedenen Stellen ins Werkzeug eingebracht werden. Natürlich ist es auch möglich mehr als zwei Komponenten zu verwenden. Dann spricht man vom Mehrkomponenten-Verfahren, die man prinzipiell wie folgt voneinander unterscheiden kann:
**1. Mehrkomponenten-Verfahren mit scharf getrennten Komponenten** Hierbei entstehen Teile mit streng getrennten Komponenten-Bereichen. Dies wird herbeigeführt durch:

### A) Umsetztechnik

Umsetzen des unfertigen Spritzlings in eine Werkzeugkavität mit Platz für die neue Komponente mit Hilfe eines Handlinggeräts, Roboters oder Bedienperson. Techniken dieser Art werden z.B. zur Herstellung von Sichtscheiben in Gerätegehäusen eingesetzt.

### B) Dreh-/Verschiebetechnik

Drehen (Drehtechnik) oder Verschieben (Schiebetechnik) eines Werkzeugteils in eine neue Lage (meist wird eine Werkzeughälfte gedreht/bewegt). Beispielhafte Anwendung: Zahnbürsten (Drehen oder Verschieben), Teile mit hartem Träger und weicher Oberfläche, oder mehrfarbige Lichtscheiben von modernen Fahrzeugen.

Eine besondere Form der Dreh-/Verschiebetechnik ist die Wendeplattentechnik. Bei der Wendeplattentechnik kommen zwei gegenüberliegende Spritzeinheiten zum Einsatz, die beide in der Maschinenmittelachse positioniert sind. Die erste Spritzeinheit wird konventionell angeordnet, die zweite befindet sich hinter der beweglichen Aufspannplatte und wird zusammen mit dieser bewegt. Zwischen der festen und der beweglichen Aufspannplatte befindet sich ein Schiebetisch, der mit Hydraulikzylindern auf Linearführungen bewegt werden kann. Auf diesem Schiebetisch ist eine drehbare Wendeplatte montiert, die das Werkzeug trägt. Durch 180°- oder 90° -Drehungen um die vertikale Achse können die Werkzeugseiten abwechselnd mit Material aus den beiden Spritzeinheiten gefüllt werden.

### C) Kernrückzugtechnik

Hierbei wird im Werkzeug nach einfüllen einer Masse ein Kern zurückgezogen, um Platz für eine andere, neu hinzukommende Komponente zu schaffen. Häufige Anwendung: Gerätegehäuse mit verschiedenfarbigen Bereichen.

### D) Mehrfarben-Verfahren

Hierbei werden unterschiedliche Farben des gleichen Werkstoffs in einem Teil verarbeitet. Anwendung findet dies z. B. bei mehrfarbigen Autorückleuchten.

### E) Mehrkomponenten-Verfahren

Hierbei werden unterschiedliche Werkstoffe wie z. B. bei Hart-Weich-Verbindungen in einem Teil verarbeitet. Beispiele sind Verschlusskappen mit angespritzten Weichdichtungen.

### 2. Mehrkomponenten-Verfahren mit verlaufenden Komponenten

Hierbei entstehen Teile mit ineinander verlaufenden Komponenten. Bekannt sind die folgenden Verfahrensvarianten:

### A) Sandwich-Verfahren

Hierbei entstehen meist Teile bei denen die im Innern liegende Komponente nicht sichtbar ist, weil sie vom Außenmaterial vollständig umhüllt wird. Häufig wird bei diesem Verfahren Recyclingmaterial als unsichtbare Komponente eingesetzt. Das Innenmaterial kann auch schaumfähig sein. Als Außenhaut wird dann hochwertiges Material eingesetzt. Beim Sandwich-Spritzgießen wird der Quellfluss der Massen beim Einströmen in das Formnest genutzt. Die Schmelzen füllen die Höhlung vom Anschnitt her nacheinander. Die zuerst einströmende Formmasse legt sich kontinuierlich an die Wand, wohin sie zuletzt von der im Innern strömenden zweiten Komponente geschoben wird. Zwei Spritzeinheiten arbeiten auf einen Spritzkopf zusammen, der es je nach Steuern durch Ventile oder Mehrfach-Verschlussdüsen gestattet, die Massen aus allen Spritzeinheiten beliebig einströmen zu lassen. Der Quellfluss sorgt dafür, dass dieses vollständige einander Umhüllen der Komponenten bis zu den kleinsten Wanddicken einwandfrei gelingt. Der Anguss kann durch die erste Komponente versiegelt werden.

Ein weiterer Gegenstand sind daher Mehrschichtfolien aufgebaut aus mindestens zwei Schichten auf Basis von weichmacherhaltigen Polyvinylacetalen wobei zumindest eine Schicht durch Spritzgießen oder Spritzprägen hergestellt wird. Hier ist es möglich, dass eine konventionell durch Extrusion hergestellte Folie mit mindestens einer weiteren Schicht umspritzt wird. Bevorzugt werden jedoch die Schichten auf Basis von weichmacherhaltigen Polyvinylacetalen gleichzeitig oder nacheinander durch Spritzgießen oder Spritzprägen im gleichen Werkzeug hergestellt.

Fig. 4 zeigt schematisch eine Mehrschichtfolie, wobei Fig. 4a) eine vollständig von zwei äußeren Schichten (g) eingekapselte innere Schicht (i) skizziert. Die innere Schicht kann im Vergleich zu den äußeren Schichten unterschiedliche Polyvinylacetale, unterschiedliche Art und/oder Mengen Weichmacher und/oder Farbstoffe oder Pigmente für ein Farbband aufweisen. Fig. 4 b) zeigt eine Mehrschichtfolie mit durchgehenden Schichten, die z.B. zur Schalldämpfung geeignet ist.

In der vorliegenden Erfindung können so Mehrschichtfolien mit 2, 3, 4 oder mehr Schichten hergestellt werden, bei denen die Schichten z.B. chemisch unterschiedliche Polyvinylacetale oder -butyrale und/oder unterschiedliche Arten oder Mengen von Weichmachern aufweisen.

### B) Marmorierung

Farbige Kunstblumenblätter und künstlicher Schmuck sind Beispiele für marmorierte Teile. Hierbei sind die wechselnden Komponenten (meist handelt es sich um den gleichen Werkstoff jedoch in unterschiedlichen Farben - es müssen aber auf jeden Fall gut verträgliche Werkstoffe sein) auch an der Oberfläche sichtbar. Dies wird durch intermittierend einsetzende Spritzaggregate erreicht. Eine solche Technik ist insbesondere für Folien in Verbundverglasungen mit Dekor einsetzbar.

Diese Techniken sind zur Herstellung von Formteilen allgemein bekannt und können auch im erfindungsgemäßen Verfahren eingesetzt werden.

Um Foliensheets mit Farbband mit sektorieller Transparenz herzustellen, kann man insbesondere das Mehrfarbenverfahren mit Kernrückzugstechnik oder Verschiebetechnik/Wendeplattentechnik anwenden. Es wird dabei zunächst die transparente Schmelze in das Werkzeug eingespritzt und abgekühlt. Anschließend wird durch einen beweglichen Kern oder Schieber eine zusätzliche Kavität für den farbigen Bereich freigegeben, in die dann die farbige Schmelze eingespritzt wird. Beim Spritzprägeverfahren kann zudem die Wendeplattentechnik zum Einsatz kommen, da diese Technologie es ermöglicht, 2K-Spritzgießen und Prägen auf einer Maschine zu kombinieren.

Durch entsprechende Strukturierung der Oberfläche des Spritzgießwerkzeugs kann die für die Entlüftung im späteren Verbundprozess (s. EP 1 235 683 B1) bei der Verbundglasherstellung erforderliche Oberflächenrauhigkeit der Folie während des Spritzgieß- bzw. Spritzprägevorgangs direkt erzeugt werden. Zur besseren Entformbarkeit des Foliensheets kann die Werkzeugoberfläche mit einer anti-adhäsiven Schicht versehen werden. Bewährt haben sich hier Schichten auf Basis PTFE.

Durch Verwendung des Spritzgieß- oder Spritzprägeverfahrens zur Herstellung von Foliensheets ist es auch möglich, Komponenten aus anderen Werkstoffen (z.B. Metalle oder Fasern) in die Folie einzuarbeiten. Feine Drähte, die später in der Windschutzscheibe die Funktion einer Antenne oder Heizung übernehmen, können in die Kavität eingebracht und anschließend mit Schmelze umspritzt werden.

So können die Folien Einlagen aus z.B. Metallfolien, Metalldrähten, Metallnetzen, Polymerfolien, Polymerfasern, Polymernetzen und/oder Flüssigkristallen aufweisen.

Die Kombination von zwei oder mehren Ausgestaltungen der Folie ist durch die Anwendung des Spritzgießens oder Spritzprägens in einfacher Weise möglich. In nur einem Arbeitsgang kann so eine keilförmige, oberflächenstrukturierte, an die Windschutzscheibengeometrie angepässte Folien mit Farbband, sektorieller Transparenz und eingearbeiteter Antenne hergestellt werden.

In allen Varianten kann die Schmelze des weichmacherhaltigen PVB in ein kaltes Werkzeug mit einer Temperatur vom z.B. 10-100 °C eingespritzt werden.

Zur Verbesserung der Fließfähigkeit des Materials im Werkzeug kann dieses auch temperiert werden (sog. Variotherm-Verfahren). Bei der Einspritzung des Materials kann die Werkzeugtemperatur auf 150 bis 200 °C eingestellt werden. Um die Entnahme des Formlings zu erleichtern, ist es optional möglich, das Werkzeug anschließend auf 10 bis 50 °C abzukühlen.

Alternativ zu dieser Variante kann der Formling auch mit einem auf diese Temperatur gekühlten flächigen Entnahme-Werkzeug aus der Form genommen werden.

Die Folien enthalten Polyvinylacetale, insbesondere ein oder mehrere teilacetalisierte Polyvinylalkohole und/oder ein oder mehrere teilacetalisierte Vinylalkohol/Vinylacetat/Ethylen-Terpolymer. Diese Polymere weisen neben nicht verseiften Acetatgruppen an die Polymerkette (Backbone) gebundene Hydroxylgruppen auf, die ganz oder teilweise mit einem oder mehreren Aldehyden acetalisiert werden. Die Herstellung der eingesetzten Polyvinylacetale ist dem Fachmann bekannt.

Als Vinylalkohol/Vinylacetat/Ethylen-Terpolymere können insbesondere EXEVAL oder EVAL der Kuraray Co. (Japan) eingesetzt werden.

Als Aldehyde werden bevorzugt solche mit 1 bis 10 Kohlenstoffatomen wie z.B. Formaldehyd, Acetaldehyd, Propionaldehyd, Butyraldehyd oder Octanal eingesetzt. Besonders bevorzugt ist Butyraldehyd, was zum bekannten Polyvinylbutyral (PVB) führt.

Geeignete Polyvinylbutyrale besitzen einen Restvinylalkoholgehalt nach ASTM D 1396 von 16 bis 25 Gew.%, insbesondere 16 bis 20 Gew.%. Geeignete Polyvinylbutyrale sind z.B. in WO 03/051974 A1 oder EP 1 412 178 B1 beschrieben. Die erfindungsgemäß verwendeten Massen werden durch Zusatz von geeigneten Weichmachern zu Polyvinylacetalen hergestellt. Alternativ ist auch der Einsatz von intern plastifizierten Polyvinylacetalen d.h. Polyvinylacetale mit geeigneten, kovalent gebundenen Seitenketten möglich.

Es ist auch möglich, mit Dialdehyden oder Aldehyd-Carbonsäuren vernetzte Polyvinylbutyrale zu verwenden. Geeignete Polymere dieser Art sind z.B. in DE 10 143 109 A1 oder WO 02/40578 A1 beschrieben.

Üblicherweise enthalten die verwendeten thermoplastischen Formmassen 10 - 40 Gew.% eines oder mehrerer Weichmacher.

Als Weichmacher für das Polyvinylacetal können die zur Herstellung von Verbundglaslaminaten bekannten "Standardweichmacher" wie Diethylenglycol-di-2-ethylhexanoat Triethylenglykol-di-2-ethylbutyrat (3GH), Triethylenglykol-din-hexanoat (3G6), Triethylenglykol-di-n-heptanoat (3G7), Triethylenglykol-di-2-ethylhexanoat, Triethylenglycoloctanoat, Tetraethylenglycol-di-2-ethylhexanoat (3G8), Dihexyladipat (DAH), Dialkyladipate mit einem Alkylrest mit mehr als 6 Kohlenstoffatomen und Oligoglycolsäureester mit einem Carbonsäurerest mit mehr als 7 Kohlenstoffatomen insbesondere Dioctyladipat (DOA), usw. verwendet werden.

Weiterhin sind auch Weichmacher der Formeln I und/oder II

R1-O(-R2-O)ₙ-CO-R5 I

R1-O(-R2-O)n-CO-R3-CO-(O-R4-)ₘO-R6 II

mit R1,R5,R6: unabhängig voneinander H, aliphatischer oder aromatischer Rest mit 1 bis 12 C-Atomen,
R3: glatte Bindung, zweiwertiger aliphatischer oder aromatischer Rest mit 1 bis 12 C-Atomen
R2, R4: unabhängig voneinander zweiwertiger aliphatischer oder aromatischer Rest mit 1 bis 12 C-Atomen
n, m : unabhängig voneinander ganze Zahlen von 1 bis 10, insbesondere 1 bis 5
geeignet.

Bevorzugt stehen R2 und R4 unabhängig voneinander für Ethylen-, Propylen- oder Butylenreste, d.h. die Weichmacher enthalten durch Ethylen-, Propylen- oder Butylenoxid oder deren Oligomere gebildete Einheiten. R1, R5 und R6 bedeuten unabhängig voneinander bevorzugt Methyl-, Ethyl-, Propyl-, Butyl- oder Hexylreste.

Die Carbonsäuren der Ester nach Formel I sind insbesondere Benzoesäure, Cyclohexancarbonsäure, Essigsäure, Propionsäure und Carbonsäuren mit 4-18 Kohlenstoffatomen. Als Carbonsäurebestandteil der Ester gemäß Formel II werden folgende Dicarbonsäuren bevorzugt: Oxalsäure, Malonsäure, Glutarsäure, Bernsteinsäure, Adipinsäure, Pimelinsäure, Azelainsäure, Sebazinsäure, Terephthalsäure, Phthalsäure, Isophthalsäure sowie sämtliche Stereoisomere der Cyclohexandicarbonsäure.

Zur Gruppe dieser Weichmacher zählen zum Beispiel Di-(2-butoxyethyl)-adipat (DBEA), Di-(2-butoxyethyl)-sebacat (DBES), Di-(2-butoxyethyl)-azelat, Di-(2-butoxyethyl)-glutarat. Di-(2-butoxyethoxyethyl)-adipat (DBEEA), Di-(2-butoxyethoxyethyl)-sebacat (DBEES), Di-(2-butoxyethoxyethyl)-azelat, Di-(2-butoxyethoxyethyl)-glutarat, Di-(2-hexoxyet-hyl)-adipat, Di-(2-hexoxyethyl)-sebacat, Di-(2-hexoxyethyl)-azelat, Di-(2-hexoxyethyl)-glutarat, Di-(2-hexoxyethoxyethyl)-adipat, Di-(2-hexoxyethoxyethyl)-sebacat, Di-(2-hexoxyethoxyethyl)-azelat, Di-(2-hexoxyethoxyethyl)-glutarat, Di-(2-butoxyethyl)-phthalat und/oder Di-(2-butoxyethoxyethyl)-phthalat.

Die Folien können als Weichmacher ausschließlich eine oder mehrere Verbindungen der Formel I oder II enthalten. Es ist auch möglich, Weichmachergemische aus den genannten "Standardweichmachern" und Weichmachern der Formeln I und/oder II einzusetzen. Solche Formmassen enthalten
a) 60 bis 85 Gew.% Polyvinylacetal
b) 14 bis 39 Gew.% mindestens eines "Standardweichmacher", und
c) 1 - 20 Gew.%, bevorzugt 2 - 10 Ges.% mindestens eines Co-Weichmachers der Formeln I und/oder II
Die Angaben in Gew.% beziehen sich auf die Gesamtrezeptur.

Die Folien können weitere, dem Fachmann bekannte Zusätze enthalten wie Restmengen an Wasser, UV-Absorber, Antioxidantien, Haftungsregulatoren (z.B. Kalium- und/oder Magnesiumsalze), optische Aufheller, Stabilisatoren, Farbmittel, Verarbeitungshilfsmittel, und/oder oberflächen-aktive Stoffe. Systeme dieser Art sind z.B. in EP 0 185 863 A1, WO 03/097347 A1 oder WO 01/43963 A1 beschrieben.

Die Verarbeitung der Folien zu Verbundsicherheitsglas kann wie üblich bei der Verbundglasherstellung durch Vakuumsackverfahren oder Vorverbund/Autoklavenprozesse erfolgen. Hierbei wird die Folie zwischen zwei Glasscheiben gelegt und die eingeschlossene Luft durch Anlegen von Vakuum oder externen Druck weitgehend entfernt. Der so erhaltene Vorverbund kann anschließend in einem Autoklaven unter erhöhtem Druck und erhöhter Temperatur zu einem transparenten Verbundglas verpresst werden.

Alternativ sind auch Einstufenprozesse durchführbar, bei denen ein zusammengelegtes Glas/Folienlaminat unter Vakuumeinwirkung verpresst und bei erhöhten Temperaturen (ca. 100 - 150 °C) zu einem transparenten blasenfreien Verbundglas verarbeitet wird.

## Patentansprüche

1. Verfahren zur Herstellung einer Folie für Verbundverglasungen durch Spritzgießen oder Spritzprägen einer Masse auf Basis von weichmacherhaltigem Polyvinylacetal in einem Werkzeug, **dadurch gekennzeichnet dass** die Masse in einem Werkzeug zu einer Folie mit einem keilförmigen Querschnitt mit einem Winkel von 0,1 bis 1 mrad ausgeformt, nach Abkühlen das Werkzeug geöffnet und die fertige Folie ausgeworfen wird.

2. Verfahren nach Anspruch 1, **dadurch gekennzeichnet, dass** die Folie Teilbereiche mit unterschiedlicher Färbung und/oder ohne Färbung aufweist.

3. Verfahren nach Anspruch 2 **dadurch gekennzeichnet, dass** der gefärbte Teilbereich anders gefärbte oder ungefärbte Bereiche aufweist.

4. Verfahren nach Anspruch 2 **dadurch gekennzeichnet, dass** ungefärbte Teilbereiche gefärbte Bereiche aufweisen.

5. Verfahren nach einem der Ansprüche 1 bis 4, **dadurch gekennzeichnet, dass** als Polyvinylacetal teilacetalisierter Polyvinylalkohol und/oder ein teilacetalisiertes Vinylalkohol/Vinylacetat/Ethylen-Terpolymer eingesetzt wird.

## Claims

1. A method for producing a film for composite glazings by injection moulding or injection stamping of a material based on plasticiser-containing polyvinyl acetal in a mould, **characterised in that** the material is shaped in a mould to form a film having a wedge-shaped cross section with an angle from 0.1 to 1 mrad, the mould being opening after cooling and the finished film being ejected.

2. The method according to Claim 1, **characterised in that** the film has individual areas of different colour and/or without colour.

3. The method according to Claim 2, **characterised in that** the coloured individual area has differently coloured or uncoloured areas.

4. The method according to Claim 2, **characterised in that** uncoloured individual areas have coloured areas.

5. The method according to one of Claims 1 to 4, **characterised in that** partly acetalised polyvinyl alcohol and/or a partly acetalised vinyl alcohol/vinyl acetate/ethylene terpolymer is used as polyvinyl acetal.

## Revendications

1. Procédé de fabrication d'une feuille destinée à des vitrages feuilletés, consistant à soumettre une masse à base d'acétal de polyvinyle contenant des plastifiants, dans un moule, à un moulage par injection ou un moulage par injection-compression, **caractérisé en ce que** ladite masse prend, au sein d'un moule, la forme d'une feuille ayant une coupe transversale cunéiforme dont l'angle est compris entre 0,1 et 1 mrad, ledit moule étant ouvert suite au refroidissement pour éjecter la feuille prête à l'usage.

2. Procédé selon la revendication 1, **caractérisé en ce que** ladite feuille comporte des parties ayant une coloration différente et/ou étant dépourvues de coloration.

3. Procédé selon la revendication 2, **caractérisé en ce que** la partie colorée comporte des zones colorées différemment ou non-colorées.

4. Procédé selon la revendication 2, **caractérisé en ce que** des parties non-colorées comportent des zones colorées.

5. Procédé selon l'une des revendications 1 à 4, **caractérisé en ce que** l'on met en oeuvre, en tant qu'acétal de polyvinyle, de l'alcool polyvinylique partiellement transformé en acétal et/ou un terpolymère alcool vinylique / acétate de vinyle / éthylène partiellement transformé en acétal.
